# EUROPEAN PATENT APPLICATION

(11) **EP 4 333 400 A1**
(43) Date of publication of application: **06.03.2024**
(21) Application number: 22192555.5
(22) Date of filing: 29.08.2022
(51) Int. Cl.: H04L 51/08, H04L 51/10, H04L 51/212

(54) **TECHNIQUE FOR PROVIDING ELECTRONIC MESSAGES**

(71) Applicant: retarus GmbH, 81549 München (DE)
(72) Inventor: HAGER, Martin, 80689 München (DE); GRAUVOGL, Michael, 80339 München (DE)
(74) Representative: Lambacher, Michael

(57) **Abstract**

The present disclosure relates to a method of providing electronic messages to a message receiving device. The method is performed by a messaging server. The method comprises: receiving (S210) an electronic message from a message sending device, wherein the electronic message comprises at least one attachment; generating (S230) an image of the content of the at least one attachment; embedding (S240) the image of the content of the at least one attachment in the body of the electronic message; and transmitting (S250) the message with the embedded image along with the attachment to the message receiving device.

## Description

### Technical Field

The present disclosure relates generally to communication technology. In particular, the disclosure relates to a technique of providing an electronic message to a message receiving device.

### Background

Electronic messages, such as electronic mail messages or emails are commonly used for exchanging information between communication entities. Electronic messages are also widely used for sending relevant documents, such as administrative documents, quotations, invoices, questionaires and so on. Such documents are usually sent as attachment of electronic mail messages. One problem asscoiated with message attachments is that they may be overlooked and not taken into consideration. Therefore, there is the risk that important information contained by message attachments is not taken into consideration making therfore email communication sometimes inefficient.

Another problem asscoiated with electronic messages is that they can be used for spreading malware. Malware spread by means of electronic mail messages may encompass viruses, worms, trojan horses, ransomware, adware and/or other malicious programs.

Accordingly, in view of the above-mentioned problems associated with electronic messages, there is a need for an improved messaging technique making the transmission of electronic messages more secure and efficient.

### Summary

To overcome at least one of the above identified problems, according to a first aspect of the invention, there is provided a method of providing an electronic message to a message receiving device. The method is performed by a messaging server and comprises the steps of receiving an electronic message from a message sending device, wherein the electronic message comprises at least one attachment; generating an image of the content of the at least one attachment; embedding the image of the content of the at least one attachment in the body of the electronic message; and transmitting the message with the embedded image along with the attachment to the message receiving device.

In the present disclosure the term "electronic message" is to be construed broadly. The term "electronic message" may encompass any type of message (of any type of electronic message format) capable for transmitting message content in a digital form. For this purpose, the message may comprise a message header and a message body. The message header may at least comprise information related to the message sender or message sending device and information related to the message receiver or message receiving device. The message content may comprise text content, graphic content and/or audio content. The message content to be transmitted by the electronic message may be located in the message body and/or at least one attachment of the electronic message.

In particular, the "electronic message" may be an electronic mail message (or in short email) which comprises at least one attachment. The electronic mail message may comprise an email header and an email body. The email header may at least comprise the email address of the email sender from which the email originates and the email address of the email receiver to which the email is to be transmitted. The email body may comprise message content to be transmitted to the message receiving device. The at least one email attachment may comprise additional content in the form of text content and/or graphic content. Depending on the type of content the attachment may be provided in a corresponding data format (e.g., pdf-, docx-, xlsx-, html-, jpg-format, and so on).

The method may further comprise the step of performing a security check of the message. The at least one security check may comprise a malware check of the attachment and/or a malware check of the (content of) the message body. The malware check may comprise a signature-based malware check of the body content and/or the at least one attachment. That is, the body content or signatures derived therefrom and/or the at least one attachment or signatures derived therefrom are compared against signatures of an antivirus signature database. Additionally or alternatively, the antivirus check may further comprise a virtual execution of the at least one attachment in a sandbox environment to detect whether the at least one attachment is malicious or not.

The image of the content of the at least one attachment may be generated and embedded in the message body after the electronic message has passed the security check (i.e., the electronic message has been found to be not malicious). Thus, the step of performing a security check may be performed before the steps of generating and embedding an image of the content of the at least one attachment are carried out. Moreover, no image may be generated and embedded if the security check reveals that the electronic message is malicious or at least suspicious. In this specific case the message may not be transmitted to the message receiving device.

The step of generating an image of the content may comprise generating a graphical image of the content in accordance with a predetermined graphical image format. For instance, a png- or jpg-format may be used for the graphical image. The content of the attachment may be converted into the desired graphical image format.

Thereafter, the generated image of the content of the at least one attachment may be directly embedded in the body of the electronic message. For instance, the generated image of the attached content may be embedded at the end or at the beginning of the body content. The so obtained electronic message comprises therefore the original body content, an image of the attachment content which is directly embedded in the message body and the original attachment. By directly embedding the attachment content in the message body the content of the attachment can be immediately grasped by the message receiver (or user of the message receiving device) without having to open the attachment. Accordingly the risk that important attachment content is overlooked by a message receiver is considerably mitigated.

Thereafter the message with the embedded image in the body is transmitted along with the original attachment to the message receiving device.

According to a second aspect of the invention, a messaging server is provided. The messaging server is configured to provide electronic messages to a message receiver or message receiving device. The messaging server comprises a receiving unit configured to receive an electronic message from a message sending device, wherein the electronic message comprises at least one attachment; an image generation unit configured to generate an image of the content of the at least one attachment; an embedding unit configured to embed the image of the attachment content in the body of the electronic message; a transmitting unit configured to transmit the message with the embedded image along with the attachment to the message receiving device.

The messaging server may further comprise a checking unit configured to perform a security check of the electronic message. The checking unit may be implemented as a malware detection unit configured to scan the at least one attachment and/or the message body of the electronic message for malicious content. The malicious content may comprise malicious software code programmed to infect the message receiving device when the electronic message or the attachment of the electronic message is opened (by a user) on the message receiving device.

The image generating unit may comprise an image converter designed (programmed) to convert text content and/or graphic content comprised in the at least one attachment into an image of a predetermined image format. For instance, the content of the at least one attachment is converted into a jpg- or png-image. Of course, other image data formats are also conceivable and the invention is not limited to that specific image data formats.

The embedding unit may be designed (programmed) to directly embed the generated image of the attachment content into the body of the electronic message. The benefit of the direct embedding is that the content of the at least one attachment is immediately visible for a user. The user does not have to open the at least one attachment in order to be able to perceive the content of the at least one attachment.

The image generation unit, embedding unit and checking unit may be implemented as software modules or combined software and hardware modules comprising program portions which implement the above-described functionalities associated with the respective units.

The messaging server may be implemented in the form of a single computer device or in the form of distributed computer devices which are arranged in a network remote from the at least one message sending device and the at least one message receiving device. The messaging server may be in (continuous) communication with the at least one message sending device and the at least one message receiving device in order to receive messages from the at least one message sending device and to transmit the received message to the at least one message receiving device. The communication between the messaging server and the message receiving device and message sending device may be carried out based on the SMTP protocol.

According to a third aspect of the invention, a computer program is provided comprising instructions to cause the messaging server to carry out the above-described method. Still further, a computer-readable medium is provided that has stored thereon the computer program described herein.

According to a fourth aspect of the invention, a messaging system is provided. The messaging system comprises a message sending device; a message receiving device; and the above described messaging server, wherein the messaging server is in communication with the message sending device and the message receiving device.

The message sending device may be an electronic device, such as a personal computer, mobile phone, tablet, or any other computing device capable to generate and transmit an electronic message to the messaging server in response of corresponding input data received from a user. The message receiving device may also be an electronic device, such as a personal computer, mobile phone, tablet, or any other computing device configured to receive, store and display an electronic message received from the messaging server.

### Brief Description of the Drawings

Further details, aspects and advantages of the present disclosure described herein will become apparent from the following drawings, in which:
- Figure 1: is a block diagram illustrating a messaging server configured to provide electronic messages received from a message sending device to a message receiving device;
- Figure 2: is a flow diagram illustrating a method of providing an electronic message to a message receiving device.

### Detailed Description

In the following description, for purposes of explanation and not limitation, specific details are set forth in order to provide for a thorough understanding of the technique presented herein. It will be apparent for a person skilled in the art that the disclosed technique may be practiced in other embodiments that depart from these specific details.

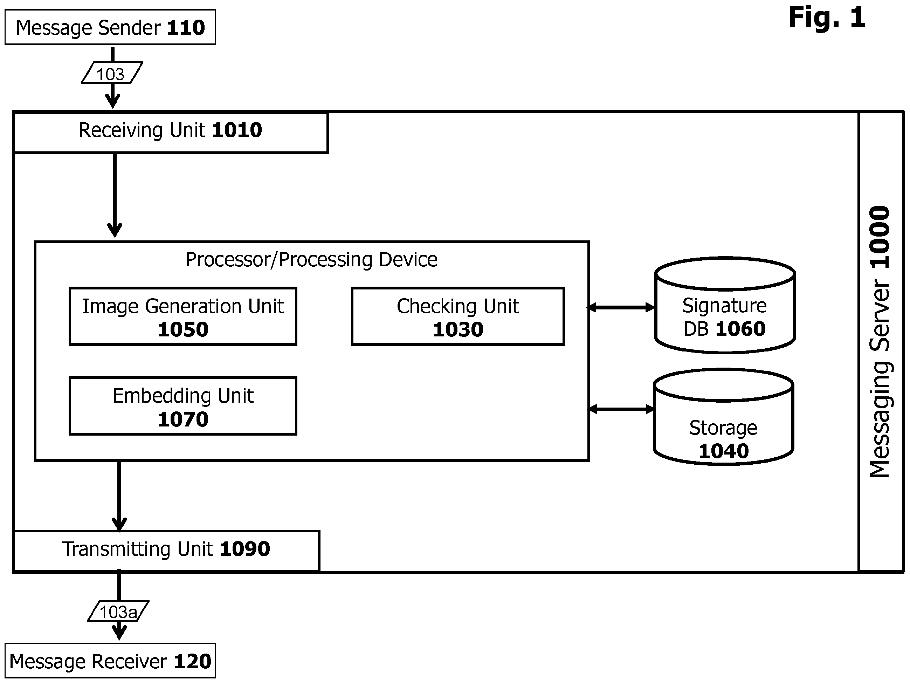

Figure 1 illustrates, in the form of a block diagram, an exemplary embodiment of a messaging server 1000 which implements a method of providing electronic messages to a message receiving device according to the invention. The messaging server 1000 is part of a communication system (communication network such as the Internet) comprising at least one message sender or messaging sending device 110 and at least one message receiver or message receiving device 120. The terms "message sender" and "message sending device" are used synonymously and represent an electronic device (e.g., computer, smartphone, tablet) used by a user to generate an electronic message 103. The terms "message receiver" and "message receiving device" are also used synonymously and represent an electronic device (e.g., computer, smartphone, tablet) in response used by a user to receive, store and/or display an (incoming) electronic message 103.

As illustrated in Figure 1, the messaging server 1000 is arranged remote from the corresponding message sending device 110 and message receiving device 120. The messaging server 1000 is configured to transmit a message 103 received from the message sending device 110 to a specific message receiving device 120 for which the message 103 is intended. For this purpose, the messaging server 1000 is arranged to be in (continuous) communication with each of the message sending device 110 and message receiving device 120. The communication between the messaging server 1000 and the corresponding message sending device 110 and message receiving device 120 can be established via a corresponding wireless and/or wired communication channel. Any known communication standard/communication protocol can be used in order to communicate one or more messages 103 between the message sending device 110 and the message receiving device 120. For instance, the message 103 may be a mail message which is communicated using the SMTP protocol.

Further, the message 103 comprises an attachment. The attachment may comprise relevant content, such as a quotation, invoice, calculation, template, and/or a form to be compiled. Depending on the content of the attachment, the attachment may be provided in different data formats. For instance, the attachment may be provided in pdf-format, docx-format, or other text or graphical formats. It is also conceivable that the attachment comprises graphical information. In this context, the attachment may have a graphical data format.

To view the content of the attachment, a user of the message receiving device 120 must click on the attachment in order to open and display the attachment on the message receiving device 120. If the user does not actively click on the attachment, the content is not perceivable. It is often the case that when checking the electronic messages on the message receiving device 120, a user simply overlooks the attachment of a message so that the information comprised by the attachment is not perceivable by the user. Moreover, sometimes the message as such or the attachment of the message is used to infect the message receiving device 120. In such a case malicious content (for instance, malware code or links to malicious webpages) is embedded in the electronic message 103 or its attachment. It is also conceivable that the attachment is masqueraded as pdf file, but in fact is an executable file so that a click on the attachment triggers an installation of malware infecting the user receiving device.

The present messaging technique overcomes both problems, i.e., the security problem associated with electronic messages and their attachments as well as the problem of not perceiving relevant content by unintentionally overlooking attachments by a user of the user receiving device 120.

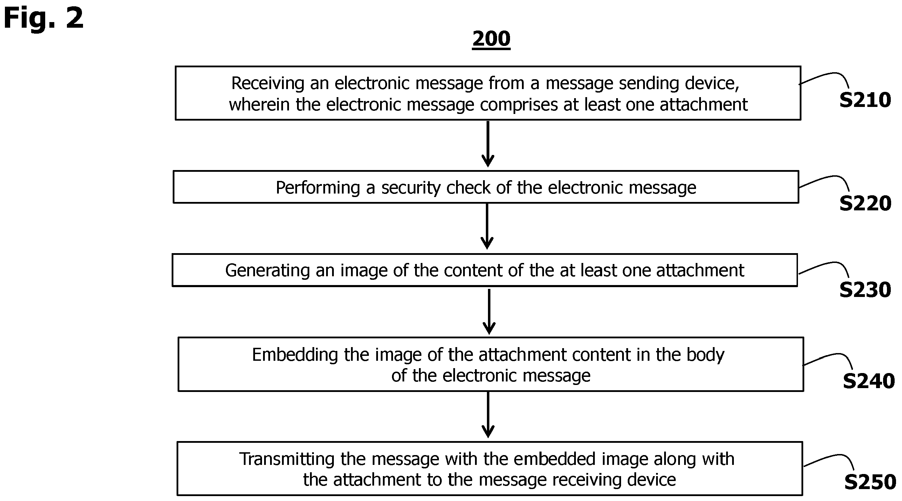

The messaging technique according to the present invention will be further described in connection with Figures 1 and 2, wherein Figure 2 illustrates in form of a flow diagram a method of providing electronic messages according to the invention, and Figure 1 illustrates the setup of the messaging server 1000 used to implement the method of Figure 2.

In a first step S210 of the method (see Figure 2) the messaging server 1000 receives, by a receiving unit 1010, an electronic message 103 from the message sending device 110. The receiving unit 1010 may be a conventional communication module configured to receive the electronic message 103 from the message sending device 110. The receiving unit 1010 may be implemented in the form of a combined software and hardware module.

The received message 103 may be (at least temporarily) stored in a storage 1040 of the messaging server 1000.

In a subsequent second step S220 of the method the received message 103 is subjected to a security check. The security check is performed by a checking unit 1030. The security check comprises a malware check of the electronic message 103 and/or the attachment of the electronic message 103. For this purpose, signatures associated with (or derived from) the electronic message 103 and/or the content of the electronic message 103 may be compared with signatures indicative of a malicious behaviour which are prestored in a signature database (see Figure 1, signature DB 1060). Alternatively, the attachment of the electronic message 103 may be (virtually) executed in a sandbox environment to detect whether the attachment contains malware or not. The security check performed by the checking unit 1030 of the messaging server 1000 helps to prevent proliferation of malware via electronic messages. According to one implementation of the invention the security checking step S220 may be skipped.

Regardless of whether the security check is performed or not, in a subsequent (third) step S230 of the method the electronic message 103 is further processed by an image generation unit 1050 of the messaging server 1000. More specifically, the image generation unit 1050 generates an image of the content of the at least one attachment of the received electronic message 103 in a graphical image having a desired graphical image format. For instance, the image generation unit 1050 converts the content of the at least one attachment into a jpeg- or png-image.

In a subsequent (fourth) step S240 of the method the generated image of the attachment content is embedded by an embedding unit 1070 of the messaging server 1000 into the body of the electronic message 103. For instance, the embedding unit 1070 directly embeds the generated image of the attachment content at the end of the body content of the electronic message 103. According to another implementation, the generated image of the attachment content is directly embedded at the beginning or in any other suitable position of the content body. The direct embedding of the image of the attachment content allows for a direct perception of the attachment content at the message receiving device 120 without having to open the attachment. Thus, the risk that relevant attachment content is overlooked by a user is considerably mitigated. Moreover, since the embedded image generated by the messaging server 1000 is free of malware, the risk for unintentional infection of the message receiving device 120 is eliminated.

The message with the embedded image 103a is ready for transmission to the message receiving device 120. For this purpose, the message 103a is handed over to the transmitting unit 1090 of the messaging server 1000. The transmitting unit 1090 may be a conventional communication module configured to transmit the electronic message with the embedded image 103 to the message receiving device 120. The transmitting unit 1090 may be implemented in the form of a combined software and hardware module. Hence, in the last (fifth) step S250 of the method, the electronic message with the embedded image is transmitted along with the original attachment to the message receiving device 120 for which the original message 103 was intended.

Optionally, the electronic message with the embedded image 103a may be (temporarily) stored in the storage 1040 of the messaging server 1040 and provided for the messaging receiving device 120 over a predetermined period of time.

The above-described image generation unit 1050, embedding unit 1070 and/or checking unit 1030 may be part of a processing device of the messaging server 1000. According to one implementation the units 1030, 1050, 1070 are implemented as software modules comprising instructions to cause the processing device of the server 1000 to carry out the above-described method steps.

The described messaging technique makes the content of message attachments perceivable without the need of opening the message attachments. It helps to avoid that relevant attachment content is unintentionally overlooked by a user. It further helps to suppress unintentional infections of electronic messaging devices within a communication network. Further, the original content of the electronic message is maintained. The user still has full access to the original attachment of the electronic message, i.e., the original attachment is downloadable and storable by the user at the message receiving device 120.

## Claims

1. A method of providing electronic messages to a message receiving device (120), the method being performed by a messaging server (1000), the method comprising:
receiving (S210) an electronic message (103) from a message sending device (110), wherein the electronic message (103) comprises at least one attachment;
generating (S230) an image of the content of the at least one attachment;
embedding (S240) the image of the content of the at least one attachment in the body of the electronic message (103); and
transmitting (S250) the message with the embedded image (103a) along with the attachment to the message receiving device (120).

2. The method of claim 1, further comprising the step of performing (S220) a security check of the electronic message (103).

3. The method of claim 2, wherein the security check comprises a malware check of the at least one attachment.

4. The method of claim 2 or 3, wherein the image of the content of the at least one attachment is generated and embedded in the message body after the electronic message (103) has passed the security check.

5. The method of claim 2 or 3, wherein the image of the content is generated and embedded in the message body if the preceding security check has revealed that the at least one attachment is non-malicious.

6. The method of any one of the preceding claims, wherein the generating step comprises converting the content of the at least one attachment into a predetermined image format.

7. The method of any one of the preceding claims, wherein the embedding step comprises directly embedding the generated image in the body of the electronic message.

8. A messaging server (1000) configured to provide electronic messages to a message receiving device (120), comprising:
- a receiving unit (1010) configured to receive an electronic message (103) from a message sending device (110), wherein the electronic message comprises at least one attachment;
- an image generation unit (1050) configured to generate an image of the content of the at least one attachment;
- an embedding unit (1070) configured to embed the image of the attachment content in the body of the electronic message; and
- a transmitting unit (1090) configured to transmit the message with the embedded image (103a) along with the attachment to the message receiving device (120).

9. The messaging server (1000) of claim 8, further comprising:
- a checking unit (1030) configured to check the content of the at least one attachment.

10. A computer program comprising instructions to cause the messaging server of claim 8 or claim 9 to carry out the method of any one of claims 1 to 7.

11. A computer-readable medium having stored thereon the computer program of claim 10.

12. A messaging system comprising:
- a message sending device (110);
- a message receiving device (120); and
- the messaging server (1000) according to claim 8 or 9, wherein the messaging server (1000) is in communication with the message sending device (110) and the message receiving device (120).
